# EUROPEAN PATENT SPECIFICATION

(11) **EP 2 466 002 B1**
(45) Date of publication and mention of the grant of the patent: **04.10.2017**
(21) Application number: 10808356.9
(22) Date of filing: 11.08.2010
(51) Int. Cl.: D06F 58/28, D06F 58/24, D06F 25/00

(54) **DRYER AND CONTROL METHOD OF THE SAME**
TROCKNER UND STEUERVERFAHREN DAFÜR
SÉCHEUR ET PROCÉDÉ DE COMMANDE ASSOCIÉ

(30) Priority: 11.08.2009 KR 20090073829; 31.08.2009 KR 20090081665
(43) Date of publication of application: 20.06.2012
(73) Proprietor: LG Electronics Inc., Seoul 150-721 (KR)
(72) Inventor: JANG, Dong Gyu, Changwon-si Gyeongsangnam-do 641-711 (KR); CHO, In Ho, Changwon-si Gyeongsangnam-do 641-711 (KR)
(74) Representative: Neobard, William John
(86) International application number: PCT/KR2010/005271
(87) International publication number: WO 2011/019207

(56) References cited:
- EP-A1- 1 473 403
- EP-A1- 1 662 034
- EP-A2- 1 657 341
- EP-A2- 1 657 351
- EP-A2- 2 028 312
- DE-A1- 2 215 262

## Description

### [TECHNICAL FIELD]

The present invention relates to a laundry machine and a control method of the same, more specifically, to a dryer which can reduce energy consumption and a drying time for user convenience.

### [BACKGROUND ART]

Generally, laundry machines are electric appliances that implements washing, drying or both of washing and drying for clothes, shoes, beddings, cloth items and the like (hereinafter, laundry). Such a laundry machine may implement one or both of drying and washing functions. In recent, a steam supply device is provided in the laundry machine and the laundry machine having a refresh function configured to remove wrinkles, static electricity and the like has been released.

A dryer which is a kind of the laundry machine may be categorized into an exhaustion type dryer and a condensation type dryer which have only a drying function. In the exhaustion type dryer, external air is sucked and heated by a heater and then the heated air is supplied to an inside of a drum rotating, with drying objects received therein, to dry the drying objects. After that, the air used in drying the drying objects is re-exhausted outside.

In the condensation type dryer, the heated air is supplied to the drum and the air containing moisture has the moisture removed while passing a condenser and then dry air is re-supplied to the drum. Here, an air circulation passage is formed in the condensation type dryer to circulate the air.

The condensation type dryer condenses the moisture contained in the air by using coolant to generate the dry air. In other words, coolant is supplied to decrease the temperature of the air and the moisture is condensed to generate the dry air. As a result, it is easy to supply coolant to the dryer having a washing function together with the drying function and the condensation type is usually adapted to such the dryer having the washing and drying functions. Also, there is another type of a dryer which drives a fan to decrease the temperature of the air and to remove the moisture of the air.

The conventional condensation type dryer using coolant has a problem of too much usage of coolant. In other words, the water supplied via a water supply system is used too much disadvantageously. Such the coolant is not the water used to wash laundry but the water used to decrease the temperature of air. Because of that, the coolant is clean water and it cannot be emphasized too much to reduce the usage of the coolant with maintaining the drying function.

Typically, coolant is supplied when a coolant valve is switched on and the supply of coolant is stopped when the coolant valve is switched off. Here, the ratio of the ON-time to the OFF-time of the coolant valve will be referenced to as `net acting ratio' of the coolant valve.

According to the conventional condensation type dryer, a net acting ratio of such the coolant valve is not variable and constant while the drying is implemented. As a result, if the net acting ratio is too low, the drying time is lengthened. If the net acting ratio is too high, the amount of used coolant is increased much.

Because of that, demands of a dryer capable of reducing the drying time and the coolant usage have been increasing.

EP2028312 discloses a clothes drier comprising a dehumidifying unit configured to dehumidify air exhausted from the drum, and to control an amount of water to be supplied thereto according to a drying level of clothes.

DE2215262 discloses that a washing drier is supplied with heated air which is regenerated by moisture removal by passing it through a condenser supplied with cooling water.

### [DISCLOSURE OF INVENTION]

### [TECHNICAL PROBLEM]

The purpose of the present invention is to provide a laundry machine in which an overall drying time can be reduced noticeably.

The purpose of the present invention is to provide a laundry machine in which energy saving can be achieved by reducing the coolant used for removing moisture in the air.

According to the present invention, the operation of the laundry machined may be controlled differently based on an amount of object to be dried. Therefore, the purpose of the present invention is to provide a reliable laundry machine to a user by providing improved drying efficiency and energy saving regardless of the amount of the object.

### [TECHNICAL SOLUTION]

To solve the problems, an object of the present invention is to provide a dryer capable of reducing the overall drying time by improved drying efficiency.

Another object of the present invention is to provide a dryer capable of saving energy by reducing the amount of coolant used to remove moisture contained in air.

A further object of the present invention is to provide a dryer capable of achieving improved drying efficiency and energy saving regardless of the amount of laundry by controlling the operation of the dryer to be differentiated according to the amount of the laundry.

To achieve these objects and other advantages and in accordance with the purpose of the invention, as embodied and broadly described herein, a dryer which dries laundry by removing moisture contained in circulating air by using coolant supplied to a condensation duct, the dryer includes a control part configured to control the amount of coolant supplied to the condensation duct to be differentiated based on a moisture containing percentage of air drawn into the condensation duct from a drum.

The control part may control the amount of supplied coolant to be increased when the moisture containing percentage is relatively high. The control part controls a net acting ratio of a coolant valve to be differentiated, the coolant valve configured to supply coolant.

The control part controls the coolant valve to be off for a preset time (t1) after supplying heated air or until a drying heater is off, in a drying start period.

The control part controls the net acting ratio of the coolant valve to be differentiated whenever each of three periods is changed into the next one, the three periods continued until the supply of the heated air is completed after the drying start period.

The control part may control the net acting ratio of the coolant valve to be the largest in the middle one of the continued three periods.

The control part may control the drying heater to generate the largest amount of the heat in the middle one of the continued three periods.

Cold air may be supplied for a preset time after the supply of the heated air is completed, only to complete the drying.

The control part may control the net acting ratio of the coolant valve to be higher in a period having the highest moisture containing percentage (intensive drying period) after the supply of the heated air than in the other periods.

The intensive drying period may start in a preset time (t2) after the supply of the heated air.

The intensive drying period may finish in a preset time (t3) after the supply of the heated air.

The preset time (t3) may be preset different according to the amount of laundry loaded in the drum.

The intensive drying period may finish when difference between a value of an indirectly sensed ambient temperature of the circulated air having heat-exchanged in the drum after the supply of the heated air and a value of an ambient temperature of the circulated air before heated after drawn into a condensation duct is a preset temperature (ΔT1) or more.

The temperature (ΔT1) may be preset according to the amount of the laundry inside the drum.

In another aspect of the present invention, a dryer includes a cabinet; a tub provided in the cabinet;
a drum rotatable in the tub;
a condensation duct configured to condense circulated air exhausted from the drum, in communication with the tub; a drying duct configured to heat and supply the circulated air to the drum, connected with the condensation duct; and a control part configured to divide a period in which the heated air is supplied to the drum in a drying into specific periods to determine a period having the highest moisture containing percentage of the circulated air (intensive drying period), and to control the amount of coolant supplied to the condensation duct to be larger in the intensive drying period than in the other periods.

The dryer may further include a tub temperature sensor provided in a bottom surface of the tub to sense an ambient temperature in the drying; and a duct temperature sensor provided in the condensation duct or the drying duct to sense an ambient before the circulated air drawn into the condensation duct is heated.

The control part may control the sensors to sense the temperature of the air in the drying and the control part determines a finish point of a period in which the heated air is supplied to the drum, based on the sensed temperatures.

The control part may determine a finish point of the intensive drying period based on the sensed temperatures.

The control part may determine that a point at which a preset time (t3) passes after the drying starts is a finish point of the intensive drying period.

The finish point of the intensive drying period may be variable according to the amount of laundry.

The control part may determine that a point at which a preset time (t2) passes after the drying starts is a start point of the intensive drying period.

In a further aspect of the present invention, a control method of a dryer to implement a drying includes a drying start period in which heated air is supplied to start a drying, with maintaining an Off state of a coolant valve; an initial drying period in which the coolant valve is driven at a preset net acting ratio after the drying starts; a drying finish period in which the supply of the heated air is completed after the drying is implemented by driving the coolant valve at a preset net acting ratio; and an intensive drying period located between the initial drying period and the drying finish period, the intensive drying period in which the coolant valve is driven at a net acting ratio higher than the preset net acting ratio to condense moisture contained in the air intensively.

The amount of heat generated by a drying heater configured to heat air may be controlled to be the largest in the intensive drying period.
thee lowest temperature allowing the drying heater to be on and the highest temperature allowing the drying heater to be off may be set to be relatively higher in the intensive drying period.

### [ADVANTAGEOUS EFFECTS]

The present invention has following advantageous effects.

According to the present invention, when a moisture containing percentage of circulated air is high, more coolant is supplied and in an initial drying period and a drying finish period coolant is supplied at a relatively low net acting ratio of a coolant valve. As a result, drying efficiency may be improved effectively.

Furthermore, the drying efficiency is improved and the overall drying time may be reduced noticeably. As a result, the amount of used coolant may be reduced noticeably.

A still further, the intensive drying period in which drying is implemented intensively may be determined efficiently. As a result, in every period once the drying starts until it is completed, efficient drying may be implemented. A dryer achieving energy saving and user convenience improvement may be provided accordingly.

### [BRIEF DESCRIPTION OF THE DRAWINGS]

The accompanying drawings, which are included to provide further understanding of the disclosure and are incorporated in and constitute a part of this application, illustrate embodiments of the disclosure and together with the description serve to explain the principle of the disclosure.

In the drawings:
FIG. 1 is a side sectional view illustrating a dryer according to an exemplary embodiment of the present invention;
FIG. 2 is a graph illustrating temperature difference between temperature sensors according to the drying time of the dryer shown in FIG. 1; and
FIG. 3 is a flow chart illustrating a control method of the dryer shown in FIG. 1.

### [BEST MODE]

Reference will now be made in detail to the specific embodiments of the present invention, examples of which are illustrated in the accompanying drawings. Wherever possible, the same reference numbers will be used throughout the drawings to refer to the same or like parts.

First of all, a basic configuration of a dryer according to an exemplary embodiment of the present invention will be described in reference to the accompanying drawings. The dryer according to the present invention is embodied as a dryer having a washing function or a washing machine having a drying function. Thus, the dryer according to the present invention may include the condensation type dryer using coolant.

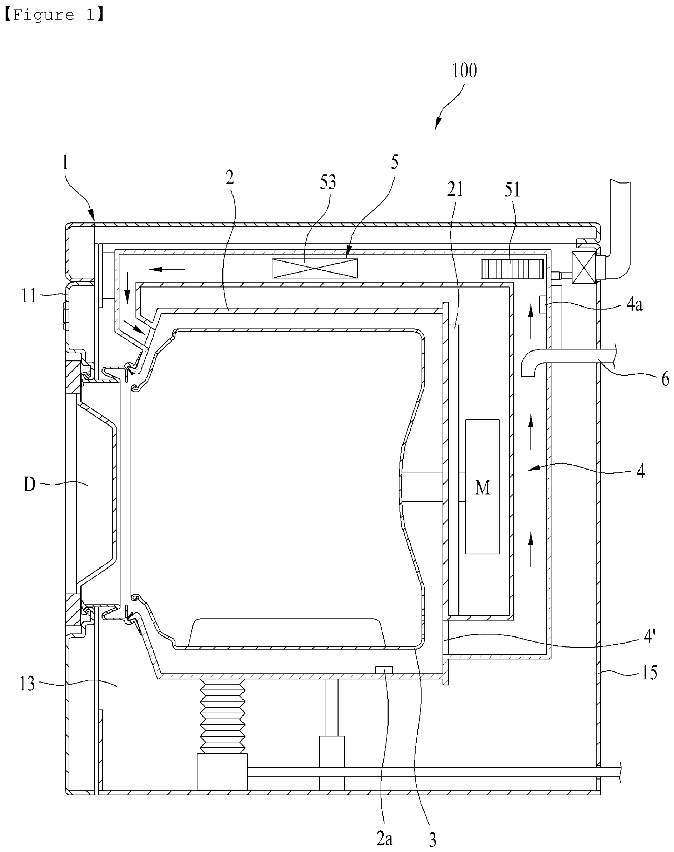

In reference to FIG. 1, a basic configuration of the dryer according to the exemplary embodiment of the present invention will be described as follows.

The dryer 100 according to this embodiment of the present invention includes a cabinet 1 configured to define an exterior appearance thereof, a drum 3 rotatable by a motor (M), a condensation duct 4 configured to condense air exhausted from the drum and a drying duct 5 configured to heat the air condensed in the condensation duct 4. The dryer 100 further includes a coolant supplier 6 configured to supply coolant to the condensation duct 4.

According to this embodiment, a fan 51 may be further provided to circulate air. The fan 51 may be in communication with the rotation of the motor (M) or an auxiliary motor may be provided to rotate the fan 51.

As this embodiment may present a washing machine having a drying function, a tub 2 configured to hold wash water therein may be provided in the cabinet 1. The drum 3 may be rotated in the tub 2 and such rotation of the drum may enable laundry washed or dried.

The cabinet 1 may include a front panel 11 having a door (D) coupled thereto, side panels 13 connected with both sides of the front panel 11 and a rear panel 15 coupled to ends of the side panels 13.

The coolant supplier 6 is installed in the condensation duct 4 and it supplies coolant to condense the moisture contained in air passing the condensation duct 4. In other words, in a drying process, the air having the moisture exhausted from the drum 3 may move to the condensation duct 4 via the tub and the air meets the coolant supplied from the coolant supplier 6 while passing the condensation duct 4, such that the moisture may be condensed. In the meanwhile, if the tub 2 is not provided, air may be directly sucked into the condensation duct 4 from a rear portion of the drum 4.

After the condensate is dropped to a lower end of the condensation duct 4, the condensate may flow into the tub 2 again to be drained. Because of that, a side of the condensation duct 4 may be connected with a rear surface of the tub 2 and the other side of the condensation duct 4 may be connected with the drying duct 5 which will be described in detail later.

The coolant supplier 6 supplies coolant if a coolant valve (not shown) is switched on to be open and stops the supply of coolant if the coolant valve is switched off to be closed. The On-time of the coolant valve divided by the OFF-time gives the net acting ratio of the coolant valve. A control part (not shown) controls such the net acting ratio of the coolant ratio to control the drying operation.

The drying duct 5 is configured to heat the dry air dehumidified in the condensation duct 4 by using a drying heater 53 and to re-supply the heated air to the drum 3 via the tub 2. Alternatively, the drying duct 5 may be configured to directly supply the heated air to the drum. As a result, a side of the drying duct 5 may be connected with the condensation duct 4 and the other side thereof may be connected with the tub 2 or the drum 3. Here, the other side of the drying duct 5 may be formed open toward the inside of the drum 3 to supply the dry air exhausted from the drying duct 5 to the drum inside. The fan 51 may be installed in the drying duct 5 to suck the air inside the condensation duct 4 into the drying duct 5 to blow it into the tub 2 or the drum 3. A heater is installed in front of the fan 51 to heat the dehumidified air before supplying the air to the drum 3. As a result, the control part controls the drying heater 53 and the fan 51 to implement the drying operation. Here, the control part controls the driving of the drum 3 and the operation of the coolant valve to control the drying operation.

In the meanwhile, the dryer according to this embodiment may include temperature sensor 2a and 4a. The control part controls the temperature sensors to sense the temperatures of air and it controls the drying operation based on the sensed temperatures.

The temperature sensor 2a may sense the temperature of the air having heat-exchanged with the laundry after supplied to the drum inside. In other words, the temperature sensor 2a may be configured to sense the temperature of the circulated air before being sucked into the condensation duct 4. As a result, the temperature sensor 2a may be located adjacent to an inlet 4' of the condensation duct 4.

When the inlet 4' of the condensation duct 4 is connected with the tub 2, the temperature sensor 2a may be provided in a bottom side of the tub 2. At this time, the temperature sensor 2a may be called as 'tub temperature sensor' or `damp air temperature sensor'. The tub temperature sensor 2a may sense an ambient temperature inside the tub. As a result, such the tub temperature sensor 2a may be provided to sense the temperature of wash water in the washing process and to sense the ambient temperature in the drying process.

The temperature sensor 4a may be provided in the condensation duct 4, alternatively, in the drying duct 5. The temperature sensor 4a may be configured to sense the temperature of the air circulated into the drum and it may be called as `duct temperature sensor' 4a.

The duct temperature sensor 4a may be provided to sense the temperature of the air circulated after passing the coolant supplier 6. Specifically, the duct temperature sensor 4a may be configured to sense the temperature of the circulated air before passing the drying heater 53. As shown in FIG. 1, the duct temperature sensor 4a may be located for the air not to pass the fan 51 after passing the coolant supplier 6 inside the condensation duct 4. As a result, the temperature sensor 4a may be called as 'dry air temperature sensor'.

The temperature sensor 2a installed in the tub 2 may be installed in a predetermined portion of the tub 2 allowing coolant not to contact with, for example, an inner rear surface to reduce the influence of the coolant when the temperature is measured in the drying process.

The temperatures sensed by the tub temperature sensor and the duct temperature sensor 4a, in other words, the sensed temperatures of the damp air and dry air may be increasing as the drying process is implemented, because the moisture contained in the laundry is removed as the drying is implemented and because the air circulated continuously or intermittently is heated by the drying heater 53. Even though there will be a predetermined difference of the temperatures increased by such the heated circulating-air, the temperature inside the dryer may be increasing. However, as the drying process is implemented, there will be difference between the increased temperature of a specific portion inside the dryer and the increased temperature of another portion inside the dryer.

Because of that, the control part may control the drying operation by using such the difference. For example, the control part may control the drying process by using the temperatures sensed by the tub temperature sensor 2a and the duct temperature sensor 4a.

The control part may control the drying process based on the temperature difference (ΔT) between those temperature sensors 2a and 4a. Specifically, the control part may control the net acting ratio of the coolant valve to be differentiated. In addition, the control part divides the drying process into a plurality of periods based on such a temperature difference (ΔT) to control the drying to be implemented efficiently, which will be described later.

According to this embodiment, the coolant supplier is controlled to supply coolant to the condensation duct to condense the air exhausted from the drum. As a result, much water will be used not only in the washing process but also in the drying process.

In an initial drying stage, air having a room-temperature starts to be heated typically. Here, together with the heating of air, the laundry having a room-temperature and the moisture contained in the laundry may start to be heated. Also, in the initial drying stage, the condensation duct 4 in a room-temperature-state, the drying duct 5, the drum 3 start to be heated, together with the tub 2 as the case may be. As a result, only a little amount of water is evaporated and the moisture containing percentage of the circulated air (here, the air exhausted from the drum) may be relatively not so high. When coolant is supplied at this time, the coolant happens to be wasted disadvantageously. In other words, even if the temperature of the circulated air is decreased by the supplying of the coolant, the amount of the condensate is quite a little and the coolant would be wasted unnecessarily.

Since the moisture containing percentage is very low for a predetermined time period (the initial stage of the drying) after the start of the drying process, it is preferable that the coolant valve is controlled to be off.

Here, the initial drying period is a period in which the drying heater 53 is driven continuously. Once the drying starts, the drying heater 53 is on to generate heat. However, the drying heater 53 has to be controlled to be on and off repeatedly to prevent damage to the laundry caused by overheat of the drying heater 53 or overheated dry air. Here, after the drying heater 53 is switched on for the first time, there would be no concern of overheating and the drying heater 53 may be maintained to be on for a predetermined time period. This time period may be the drying start period and the temperature at which the drying heater 53 is controlled to be off for the first time may be preset. For example, the temperature of the drying heater 53 or the ambient temperature is 100°C, the drying heater 53 may be controlled to be off. Because of that, the period for which the drying heater 53 is controlled to be off after to be on for the first time is referenced to as 'drying start period' and the coolant valve is controlled to be off in this period.

In the meanwhile, coolant may be cold water typically and the temperature of coolant is generally lower than the room temperature. Once the drying starts, it is more important to heat the circulated air, the drum 3, the laundry and a variety of the ducts efficiently than to remove the moisture from the laundry. Because of that, the supply of coolant in the drying start period may interfere with the efficient heating only to waste energy. As a result, the coolant valve is controlled to be off in the drying start period.

In contrast, the moisture happens to be evaporated in a predetermined time period after the drying starts, only to increase the moisture containing percentage. Because of that, it is necessary to remove the moisture contained in the air and to drive the coolant valve for that.

According to the conventional condensation type dryer, the coolant valve is controlled to be operated in the same pattern until the drying is completed. In other words, coolant is controlled to be supplied at the same net acting ratio. Because of that, the drying time is increased and coolant usage is increased.

According to research and development performed by the present inventor, it is known that the moisture containing percentage is differentiated during the drying process.

As described above, the heating starts in the room temperature state in the drying start period and little evaporation of moisture will occur. Because of that, it is known that it is preferable not to supply the coolant in the drying start period.

It is known that an intensive drying period in which the evaporation of moisture occurs slowing may start after the initial drying period. In this period, the inner elements of the dryer are heated uniformly and an inner portion as well as a surface of the laundry is heated to a predetermined degree. Because of that, the moisture may be evaporated drastically. Also, in this period, entangling of the laundry is smoothened and a contact area between the laundry and the heated air may be broadened quite a lot.

It is known that a drying finish period in which the evaporation of the moisture occur slowly may start after the intensive drying period. It means not so much moisture left that the evaporation occurs slowly in this period. In this period, the moisture failed to be evaporated from the laundry may be evaporated.

Based on the characteristics of the drying periods described above, when the moisture containing percentage of the air is high, the supply of the coolant may be increased. When the moisture containing percentage of the air is low, the supply of the coolant may be decreased. In other words, the supply amount of the coolant may be increased in the period in which the moisture evaporation occurs intensively. The moisture evaporation is generated actively in the period in which the intensive moisture evaporation occurs and the intensive drying period is shortened to reduce the time required by the overall drying process.

The amount of the supplied coolant may be relatively decreased in a period in which relatively less moisture evaporation occurs. The amount of the supplied coolant is differentiated in these periods. As a result, the overall drying time is reduced and the amount of used coolant may be reduced remarkably.

Such a control of the coolant supply amount is implemented by differentiating the net acting ratio of the coolant valve. For example, the net acting ratio of the coolant valve is driven at a reference net acting ratio (for example, ON for 8 seconds/OFF for 10 seconds). When the moisture containing percentage of the air exhausted from the drum 3 or the tub 2 during the drying process is high, the net acting ratio of the coolant valve may be set to be higher than the reference net acting ratio (for example, ON for 8 seconds/OFF for 5 seconds). Here, the reference net acting ratio may be set to be different in the initial drying and in the latter drying, with set to be lower than the maximum net acting ratio.

Here, the moisture containing percentage may be variable as the drying is implemented and it matters how to detect and determine the variable moisture containing percentage. Also, it matters how to detect and to determine far the drying process is implemented. Such a detection and determination may be implemented based on the temperatures sensed by the tub temperature sensor 2a and the duct temperature sensor 4a by the control part.

As described above, the tub temperature sensor 2a is not located in the passage of the circulated air. As the drying is implemented, the temperature sensed by the tub temperature sensor may not be increased drastically. Although the drying is implemented to a predetermined degree, the temperature would be increased drastically although it is increased less drastically than the temperature of the circulated air in the air circulation passage. In contrast, the duct temperature sensor 4a is located in the air circulation passage. As the drying is implemented, the temperature sensed by the duct temperature sensor 4a would be increased drastically. The temperature increase of the tub temperature sensor 2a and the duct temperature sensor 4a may be differentiated according to the moisture which has to be evaporated, in other words, the amount of the moisture remaining in the laundry. If the moisture to evaporate is much, the temperature increase of the sensors may be little or very small. If the moisture to evaporate is little, the temperature increase may be large.

As the drying is implemented, the temperature increase may be different according to the locations of the temperature sensors and the temperature difference may be different accordingly. In other words, the difference between the temperature sensed by the duct temperature sensor 4a and the temperature sensed by the tub temperature sensor 2a may be differentiated as the drying is implemented. The moisture containing percentage of the circulated air may be determined based on such the temperature difference and the degree of the drying implementation may be determined accordingly. In addition, a start point or a finish point of the intensive drying period in which the intensive moisture evaporation occurs may be determined and a finish point of the drying process may be determined.

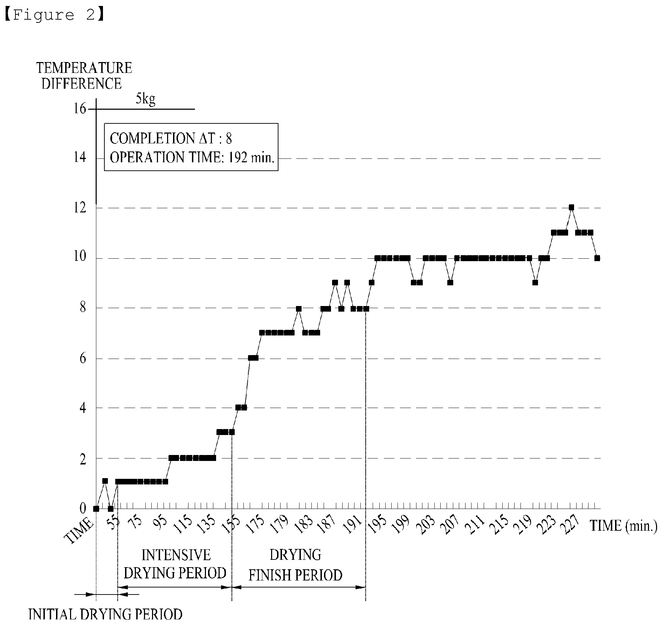

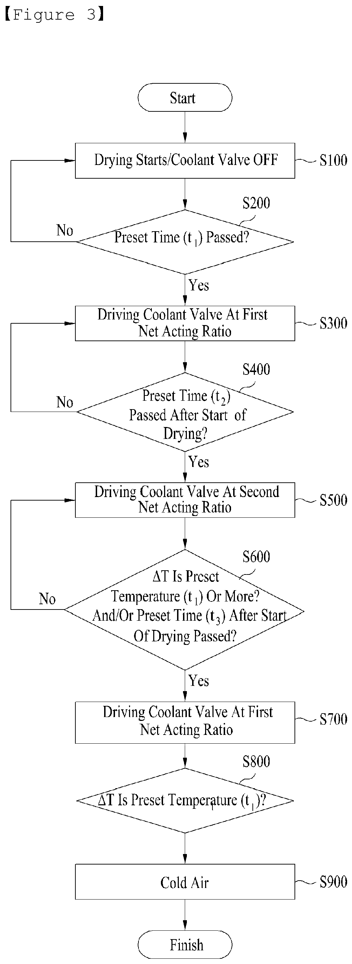

In reference to FIGS. 2 and 3, the above configuration will be described in detail.

FIG. 2 is an experimental graph illustrating the temperature difference (ΔT) according to the drying implementation time. This experiment is implemented with the laundry amount of 5kg and the temperature difference value is given by subtracting the temperature of the tub temperature sensor 2a from the temperature of the duct temperature sensor 4a.

As described above, once the drying heater 53 and the fan 51 are driven to start the drying, the inside of the dryer as well as the laundry start to be heated and there may be little moisture evaporation. Because of that, the drying is implemented for a predetermined time period (t1) in the state of the coolant valve controlled to be OFF (S100). This time period may be the drying start period and it may include 5 minutes, for example, (S200). Here, the drying start period may be a period of the time required to control the drying heater 53 until be OFF from to be ON. This period may be relatively short in comparison to the other periods and it is not shown in FIG. 2.

The initial drying period may start after the drying start period. In this period, coolant is supplied to condense and remove the moisture contained in the circulated air.

There is much moisture to dry in the initial drying. Also, the laundry and the drum have to be heated, together with the tub in some cases. Because of that, the air heated in the drying duct may heat-exchange with the moisture, the laundry, the drum and the tub. The circulated air may heat-exchange with the coolant in the condensation duct. As a result, the increase of the temperatures sensed by the tub temperature sensor 2a may quite small and the temperature difference (ΔT) in the initial drying period may be quite small. As shown in FIG. 2, the temperature difference (ΔT) may be '0' or '1' degree. Here, the temperature sensed by the duct temperature sensor 4a may be lower than the temperature sensed by the tub temperature sensor 2a temporarily in the initial drying period. This is because the temperature of the air sensed right after cooled by the coolant may be lower than the ambient temperature of the tub. In this case, the temperature difference (ΔT) may be determined to be '0' .

As a result, the initial drying period may be a period to heat the overall configuration of the dryer for the drying. The moisture evaporation is little in such the initial drying period and the control part may control the coolant valve to be operated at a first net acting ratio (S300).

Passing the initial drying period, the moisture will be evaporated from the heated laundry drastically and this period may be the intensive drying period. The intensive drying period is a period having a quite high moisture containing percentage because of the drastic evaporation of the moisture. Coolant is intensively supplied in this period and the moisture contained in the circulated air may be intensively removed by using the supplied coolant in this period.

Here, a start point of the intensive drying period may be preset. In other words, it is determined whether a preset time period (t2) passes after the drying starts to control the intensive drying period to start. For example, the preset time (t2) may be 60 minutes. The preset time (t2) may be determined regardless of the amount of the laundry to dry. Since the heat capacity of the duct elements, drum and tub is large in comparison to the laundry and the moisture as described above, the amount of the laundry may be ignored accordingly. However, the time (t2) may be set to be longer when the laundry amount is large than when the laundry amount is small.

In the meanwhile, a start point of the intensive drying period may be determined based on the temperature difference (ΔT). As described above the evaporation of the moisture may occur drastically in the intensive drying period and this is because the heating of the configuration elements is implemented completely. As a result, the temperature difference generated by the coolant supply may be ignored. The heat amount of the heated air may be quickly transmitted to the moisture by the latent heat of the moisture evaporation. Because of that, the overall heat exchange inside the dryer may be implemented very effectively enough to generate a period without the varied temperature difference (ΔT). if a predetermined time passes without variation of the temperature difference (ΔT), it is determined that the drastic moisture evaporation occurs and the start point of the intensive drying period may be determined accordingly.

In addition, to remove the difference of the temperatures generated by the coolant supply, it is possible not to sense the temperature when the coolant is supplied or to ignore the temperature sensed at this time.

Here, the temperature difference (ΔT) may be controlled to be measured at a preset interval, for example, 30 seconds. The temperature difference (ΔT) may be measured by using an average value of the temperatures measured by the tub temperature sensor and the duct temperature sensor for a preset time period a number of times.

As a result, when sensing the temperature difference (ΔT) not differentiated a preset number of times or more in the initial drying period, the start point of the intensive drying period may be determined.

As described above, the moisture may be evaporated drastically in the intensive drying period and the moisture containing percentage of the air sucked into the condensation duct may be relatively high. Because of that, the amount of the condensate may be increased by the slight decreasing of the temperature and it is preferable that the coolant valve is controlled at a second net acting ratio in the intensive drying period (S500). Here, the second net acting ratio may be higher than the first net acting ratio. More coolant is supplied to condense the moisture contained in the air intensively and the evaporation of the moisture may be activated accordingly.

In the meanwhile, during the intensive drying period, the moisture of the drum or the tub may be evaporated mostly and the moisture contained in the surface of the laundry may be evaporated mostly. As a result, the speed of the moisture evaporation may be decreased gradually and it is very important to determine a finish point of the intensive drying period.

Such the finish point of the intensive drying period may be preset. In other words, it may be determined in a predetermined time (t3) after the drying starts that the intensive drying period is completed (S600). For example, in 150 minutes after the drying starts, it may be determined that the intensive drying period is completed.

Here, the preset time (t3) may be variable according to the amount of the laundry. During the intensive drying period, most of the heat may be used to evaporate the moisture and the heat transmitted to the configuration elements composing the dryer is not so much. As a result, if the amount of the laundry is in proportion to the amount of the moisture to evaporate, the preset time (t3) is controlled to be lengthened in case of a large amount of the laundry and to be shortened in case of a small amount of the laundry.

The preset time (t3) may be determined based on the temperature difference (ΔT). in other words, a point capable of allowing the temperature difference (ΔT) to meet a preset temperature (ΔT1) may be determined to be a finish point of the intensive drying period (S600). Here, if the amount of the laundry is large, it will takes more time for the temperature difference (ΔT) to reach the preset temperature value (ΔT1) because of the reasons described above and the time taken by the intensive drying period may be differentiated according to the amount of the laundry.

Here, the temperature difference (ΔT) is more related to the speed of the moisture evaporation than the amount of the moisture to evaporate. The fact that the temperature difference (ΔT) is getting large means that the heated air is not heat-exchanged enough for the moisture evaporation. In other words, the speed of the moisture evaporation is lowered because the moisture to evaporate is not so much.

As a result, if such the temperature difference meets a predetermined value, in other words, the preset temperature (ΔT1), it may be determined that the period of the drastic moisture evaporation finishes. For example, the preset temperature (ΔT1) may be '4' and it may be preset regardless of the amount of the laundry.

In the meanwhile, the moisture evaporation occurs after the intensive drying period finishes. This period passing the intensive drying period may be a period in which the moisture contained deep in the laundry is evaporated. Because of that, there is not so much moisture to evaporate and there is not so much heat generated while the heated air heat-exchanging with the moisture accordingly. As a result, the temperature difference (ΔT1) may be increasing gradually.

After the intensive drying period, the evaporated moisture is not so much and it is preferable that the amount of the supplied coolant is reduced in a drying finish period (S700). For example, the coolant valve may be driven at the first net acting ratio as described above.

In the meanwhile, as the drying is implemented continuously, the evaporated moisture may be reduced remarkably with a concern of overheating the laundry. Compared with the drying effect, the drying time, the coolant and the energy used in this period may be increased a lot. As a result, it is very important to determine a finish point of the drying finish period. The finish point of the drying finish period may be determined by using the temperature difference (ΔT) described above. For example, if the temperature difference (ΔT) meets a preset temperature (ΔT1), 2it may be determined that a point having the temperature difference (ΔT) to meet the preset temperature (ΔT2) is the finish point of the drying finish period. Such the preset temperature (ΔT2) may be preset different according to a drying course or the user's selection. It may be preset different according to the amount of the laundry.

In addition, if the start point and the finish point of the drying finish period are determined by using the temperature difference (ΔT) described above, a point at which the preset value is sensed for the first time may be the start point and the finish point but the present invention is not limited thereto. For example, a point at which a value more than the preset value is sensed more than two times may be determined to be the start point and the finish point.

In the meanwhile, once the drying finish period finishes, the supply of heated air is completed. After that, cold air may be supplied for a predetermined time (S900). Once the supply of the cold air is completed, the drying process may be completed. Here, the supply of the cold air may be omitted. However, it is preferable to decrease the temperature of the laundry and the temperature inside the drum and it is preferable that the drying is completed by the completion of the cold air supply accordingly. This is because the user might get burn if the user takes the heated laundry out of the dryer.

The above temperature difference (ΔT) may be the difference of the temperatures directly sensed by the tub temperature sensor and the duct temperature sensor, or it may be calculated based on a compensated temperature. This is because the temperatures initially sensed by the tub temperature sensor may be very variable. For example, there may be a large difference between the initial temperatures sensed by the tub temperature sensor in a drying course after a laundry sterilizing washing course and the initial temperatures sensed in a drying course after a cold water washing course. In contrast, there may be a relatively small difference between the initial temperatures sensed by the duct temperature sensor. As a result, to compensate the temperature difference values (ΔT) differentiated by the difference of the initial temperatures, the initial temperature difference (ΔT) is 'Tc' and the Tc value is added to the temperature (T1) sensed by the tub temperature sensor. The compensated tub temperature T2 = T1 + Tc. As a result, ΔT = T3 (Duct Temperature) - T2 (Compensated Tub Temperature).

Here, 'Tc' may be calculated after the hot air supply is implemented without the condensation. For example, `Tc' may be calculated in 5 minutes after the drying starts. Such the temperature compensating enables the flat temperature difference (ΔT) measured regardless of the initial temperature difference.
if the algorithm configured to increase the net acting ratio of the coolant valve is applied a case of the high moisture containing percentage like in the above embodiment of the present invention, there may be an effect of increase of a drying degree by 10% in comparison to a case in that the coolant valve is controlled to be operated at the same single net acting ratio in the drying process. The effect of 1% increase of the drying degree may reduce the drying time by 30 minutes to improve drying efficiency noticeably.

According to the embodiment described above, each period of the drying may be determined based on the time reference or the temperature difference (ΔT) or based on both of the them. For example, the drying start period may be determined based on the time reference and the intensive drying period may be determined based on the temperature difference (ΔT).

Moreover, according to the above embodiment of the present invention, the amount of the coolant supplied in each period of the drying may be differentiated. The amount of the coolant may be differentiated by differentiating the net acting ratio of the coolant valve. Together with such the control of the net acting ratio, the control of the drying heater 53 may be differentiated in each period of the drying described above.

For example, more heat is generated from the drying heater 53 in the intensive drying period. Because of that, it is possible to supply more heat in the intensive drying period than in a period having the drying implemented with the maximum heat. The drying heater 53 may be controlled to be on and off repeatedly if the drying starts period is passing. For example, the drying heater 53 may be controlled to be on at the preset lowest temperature of the drying heater and to be off at the preset highest temperature of the drying heater. As a result, the preset lowest temperature and highest temperature in the intensive drying period may be set to be higher than in the other periods. For example, the drying heater is controlled to be on and off repeatedly when the temperature of the drying heater is 97°C to 100°C in the drying start period and when the temperature of the drying heater is 99°C to 102°C in the intensive drying period. Such the control of the drying heater 53 may enable the drying to be implemented more efficiently. Here, such the control of the drying heater 53 and the above control of the coolant valve are combinedly implemented and more efficiency drying may be implemented in the intensive drying period. In other words, such the control of the drying heater may be applicable to the above embodiment. As a result, overall drying efficiency and energy saving achieved by the time reduction may be achieved.

It will be apparent to those skilled in the art that various modifications and variations can be made in the present disclosure without departing from the scope of the claims. Thus, it is intended that the present disclosure cover the modifications and variations of this invention provided they come within the scope of the appended claims.

### [INDUSTRIAL APPLICABILITY]

An industrial applicability of the present invention is included in the detailed description of the invention.

## Claims

1. A dryer (100) arranged to dry laundry by removing moisture contained in circulating air by using coolant supplied to a condensation duct (4), wherein
a control part of the dryer is configured to control a coolant valve to control the amount of coolant supplied by a coolant supplier (6) to the condensation duct (4) based on a moisture containing percentage of air drawn into the condensation duct (4) from a drum (3),
wherein, in a drying start period of the drying process, after a drying heater (53) is switched on for the first time, the control part is configured to control the coolant valve to be off for a preset time (t1) after the start of the drying process or until the drying heater (53) is controlled to be off for the first time, and wherein the control part is configured to control a net acting ratio of the coolant valve to be differentiated, the net acting ratio being obtained by dividing the ON-time of the coolant valve by the OFF-time, and wherein, after the drying start period, the control part is configured to control the net acting ratio of the coolant valve to be a first ratio in a first period, a second ratio in a second period and third ratio in a third period differentiated whenever each of the first, second and third periods is changed into the next one, the first, second and third periods continued until the supply of the heated air is completed.

2. The dryer as claimed in claim 1, wherein the control part controls the amount of supplied coolant to be increased when the moisture containing percentage of air is high.

3. The dryer as claimed in claim 1, wherein the control part controls the net acting ratio of the coolant valve to be the largest in the middle one of the continued three periods.

4. The dryer as claimed in claim 1, wherein the control part controls the drying heater to generate the largest amount of the heat in the middle one of the continued three periods.

5. The dryer as claimed in claim 1, wherein cold air is supplied for a preset time after the supply of the heated air is completed, only to complete the drying.

6. The dryer as claimed in claim 1, wherein the second period is an intensive drying period, wherein the control part controls the net acting ratio of the coolant valve to be higher in the intensive drying period having the highest moisture containing percentage than in the other periods.

7. The dryer as claimed in claim 6, wherein the intensive drying period starts in a preset time (t2) after the start of the drying process.

8. The dryer as claimed in claim 6, wherein the intensive drying period finishes in a preset time (t3) after the start of the drying process.

9. The dryer as claimed in claim 8, wherein the preset time (t3) is preset differently according to the amount of laundry loaded in the drum (3).

10. The dryer as claimed in claim 6, wherein the intensive drying period finishes when a temperature difference between a value of an indirectly sensed ambient temperature of the circulated air having heat-exchanged in the drum (3) and a value of an ambient temperature of the circulated air before being heated after having been drawn into a condensation duct (4) is a preset temperature difference (ΔT1) or more.

11. The dryer as claimed in claim 10, wherein the temperature difference (ΔT1) is preset according to the amount of the laundry inside the drum (3).

12. The dryer as claimed in claim 1, wherein the control part is configured to determine an intensive drying period among the first, second and third period after the drying start period, said intensive drying period having the highest moisture containing percentage of the circulated air, and to control the amount of coolant supplied to the condensation duct (4) to be larger in the intensive drying period than in the other periods.

13. A method of controlling a dryer (100) arranged to dry laundry by removing moisture contained in circulating air by using coolant supplied to a condensation duct (4), the method comprising:
controlling, using a control part of the dryer (100), a coolant valve to control the amount of coolant supplied by a coolant supplier (6) to the condensation duct (4) based on moisture containing percentage of air drawn into the condensation duct (4) from a drum (3); and in a drying start period of the drying process, after a drying heater (53) is switched on for the first time, controlling, using the control part of the dryer (100) the coolant valve to be off for a preset time (t1) after the start of the drying process or until a drying heater (53) is controlled to be off for the first time, and
controlling, using a control part of the dryer (100), a net acting ratio of the coolant valve to be differentiated, the net acting ratio being obtained by dividing the ON-time of the coolant valve by the OFF-time, and after the drying start period, controlling, using a control part of the dryer (100) the net acting ratio of the coolant valve to be a first ratio in a first period, a second ratio in a second period and third ratio in a third period, to be differentiated whenever each of the first, second and third periods is changed into the next one, the first, second and third periods continued until the supply of the heated air is completed.

14. A method as claimed in claim 13,
wherein the first period is an initial drying period in which the coolant valve is driven at a preset net acting ratio after the drying starts;
wherein the third period is a drying finish period in which the supply of the heated air is completed after the drying is implemented by driving the coolant valve at a preset net acting ratio; and
wherein the second period is an intensive drying period located between the initial drying period and the drying finish period, the intensive drying period in which the coolant valve is driven at a net acting ratio higher than the preset net acting ratio to condense moisture contained in the air intensively.

15. The method as claimed in claim 14, wherein the amount of heat generated by a drying heater (53) configured to heat air is controlled to be the largest in the intensive drying period.

16. The method as claimed in claim 15, wherein the lowest temperature allowing the drying heater (53) to be on and the highest temperature allowing the drying heater (53) to be off are set to be higher in the intensive drying period than in other periods.

## Patentansprüche

1. Trockner (100) angelegt zum Trocknen von Wäsche durch Entziehen von in Umluft enthaltener Feuchte mit Hilfe von Kühlmittel, das einer Kondensationsleitung (4) zugeführt wird, wobei
ein Steuerungsteil des Trockners ausgelegt ist zum Ansteuern eines Kühlmittelventils zum Regeln der von einer Kühlmittelzufuhr (6) zur Kondensationsleitung (4) geführten Kühlmittelmenge anhand eines anteiligen Feuchtegehalts der aus einer Trommel (3) in die Kondensationsleitung (4) gesaugten Luft,
wobei der Steuerungsteil so ausgelegt ist, dass er in einem Trocknungsstartzeitraum des Trocknungsvorgangs nach dem erstmaligen Einschalten einer Trocknungsheizung (53) das Kühlmittelventil für eine voreingestellte Zeit (t1) nach dem Start des Trocknungsvorgangs oder bis zum erstmaligen AUS-Stellen der Trocknungsheizung (53) auf AUS stellt, und
wobei der Steuerungsteil so ausgelegt ist, dass er ein Nettowirkverhältnis des Kühlmittelventils differenziert ansteuert, wobei das Nettowirkverhältnis ermittelt wird, indem die EIN-Schaltdauer des Kühlmittelventils durch die AUS-Schaltdauer dividiert wird, und
wobei der Steuerungsteil so ausgelegt ist, dass er nach dem Trocknungsstartzeitraum das Nettowirkverhältnis des Kühlmittelventils auf ein erstes Verhältnis in einem ersten Zeitraum, ein zweites Verhältnis in einem zweiten Zeitraum und ein drittes Verhältnis in einem dritten Zeitraum differenziert ansteuert, wenn der erste, zweite und dritte Zeitraum jeweils zum nächsten wechselt, wobei der erste, zweite und dritte Zeitraum fortgesetzt werden, bis die Zufuhr der erhitzten Luft beendet ist.

2. Trockner nach Anspruch 1, wobei der Steuerungsteil die Menge an zugeführtem Kühlmittel so regelt, dass sie erhöht wird, wenn der anteilige Feuchtegehalt der Luft hoch ist.

3. Trockner nach Anspruch 1, wobei der Steuerungsteil das Nettowirkverhältnis des Kühlmittelventils so ansteuert, dass es in dem mittleren der fortgesetzten drei Zeiträume am höchsten ist.

4. Trockner nach Anspruch 1, wobei der Steuerungsteil die Trocknungsheizung so ansteuert, dass sie die größte Wärmemenge in dem mittleren der fortgesetzten drei Zeiträume erzeugt.

5. Trockner nach Anspruch 1, wobei für eine voreingestellte Zeit nach beendeter Zufuhr der erhitzten Luft kalte Luft nur zum Beenden der Trocknung zugeführt wird.

6. Trockner nach Anspruch 1, wobei der zweite Zeitraum ein Intensivtrocknungszeitraum ist, wobei der Steuerungsteil das Nettowirkverhältnis des Kühlmittelventils so ansteuert, dass es im Intensivtrocknungszeitraum, der den höchsten anteiligen Feuchtegehalt aufweist, höher als in den anderen Zeiträumen ist.

7. Trockner nach Anspruch 6, wobei der Intensivtrocknungszeitraum in einer voreingestellten Zeit (t2) nach dem Start des Trocknungsvorgangs beginnt.

8. Trockner nach Anspruch 6, wobei der Intensivtrocknungszeitraum in einer voreingestellten Zeit (t3) nach dem Start des Trocknungsvorgangs endet.

9. Trockner nach Anspruch 8, wobei die voreingestellte Zeit (t3) je nach Wäschelademenge in der Trommel (3) unterschiedlich voreingestellt ist.

10. Trockner nach Anspruch 6, wobei der Intensivtrocknungszeitraum endet, wenn eine Temperaturdifferenz zwischen einem Wert einer indirekt gemessenen Umgebungstemperatur der umgewälzten Luft nach Wärmetausch in der Trommel (3) und einem Wert einer Umgebungstemperatur der umgewälzten Luft vor ihrer Erhitzung nach ihrem Ansaugen in eine Kondensationsleitung (4) eine voreingestellte Temperaturdifferenz (AT1) beträgt oder übersteigt.

11. Trockner nach Anspruch 10, wobei die Temperaturdifferenz (ΔT1) in Abhängigkeit von der Wäschemenge in der Trommel (3) voreingestellt ist.

12. Trockner nach Anspruch 1, wobei der Steuerungsteil so ausgelegt ist, dass er aus dem ersten, zweiten und dritten Zeitraum nach dem Trocknungsstartzeitraum einen Intensivtrocknungszeitraum bestimmt, wobei der Intensivtrocknungszeitraum den höchsten anteiligen Feuchtegehalt der umgewälzten Luft aufweist, und die der Kondensationsleitung (4) zugeführte Kühlmittelmenge so regelt, dass sie im Intensivtrocknungszeitraum höher als in den anderen Zeiträumen ist.

13. Verfahren zum Steuern eines Trockners (100), der angelegt ist zum Trocknen von Wäsche durch Entziehen von in der Umluft enthaltener Feuchte mit Hilfe von Kühlmittel, das einer Kondensationsleitung (4) zugeführt wird, wobei das Verfahren umfasst:
Ansteuern eines Kühlmittelventils mit Hilfe eines Steuerungsteils des Trockners (100) zum Regeln der von einer Kühlmittelzufuhr (6) zur Kondensationsleitung (4) geführten Kühlmittelmenge anhand eines anteiligen Feuchtegehalts der aus einer Trommel (3) in die Kondensationsleitung (4) gesaugten Luft; und
in einem Trocknungsstartzeitraum des Trocknungsvorgangs nach dem erstmaligen Einschalten einer Trocknungsheizung (53), Stellen des Kühlmittelventils, mit Hilfe des Steuerungsteils des Trockners (100), auf AUS für eine voreingestellte Zeit (t1) nach dem Start des Trocknungsvorgangs oder bis zum erstmaligen AUS-Stellen einer Trocknungsheizung (53), und
differenziertes Ansteuern eines Nettowirkverhältnisses des Kühlmittelventils mit Hilfe eines Steuerungsteils des Trockners (100), wobei das Nettowirkverhältnis ermittelt wird, indem die EIN-Schaltdauer des Kühlmittelventils durch die AUS-Schaltdauer dividiert wird, und
nach dem Trocknungsstartzeitraum, differenziertes Ansteuern des Nettowirkverhältnisses des Kühlmittelventils, mit Hilfe eines Steuerungsteils des Trockners (100), auf ein erstes Verhältnis in einem ersten Zeitraum, ein zweites Verhältnis in einem zweiten Zeitraum und ein drittes Verhältnis in einem dritten Zeitraum, wenn der erste, zweite und dritte Zeitraum jeweils zum nächsten wechselt, wobei der erste, zweite und dritte Zeitraum fortgesetzt werden, bis die Zufuhr der erhitzten Luft beendet ist.

14. Verfahren nach Anspruch 13,
wobei der erste Zeitraum ein anfänglicher Trocknungszeitraum ist, in welchem das Kühlmittelventil nach dem Beginn der Trocknung mit einem voreingestellten Nettowirkverhältnis betrieben wird;
wobei der dritte Zeitraum ein abschließender Trocknungszeitraum ist, in welchem die Zufuhr der erhitzten Luft beendet wird, nachdem die Trocknung durch Betreiben des Kühlmittelventils mit einem voreingestellten Nettowirkverhältnis vollzogen ist; und
wobei der zweite Zeitraum ein Intensivtrocknungszeitraum ist, der sich zwischen dem anfänglichen Trocknungszeitraum und dem abschließenden Trocknungszeitraum befindet, wobei im Intensivtrocknungszeitraum das Kühlmittelventil mit einem Nettowirkverhältnis höher als das voreingestellte Nettowirkverhältnis zum intensiven Kondensieren von in der Luft enthaltener Feuchte betrieben wird.

15. Verfahren nach Anspruch 14, wobei die Wärmemenge, die von einer zum Erhitzen von Luft ausgelegten Trocknungsheizung (53) erzeugt wird, so angesteuert wird, dass sie im Intensivtrocknungszeitraum am höchsten ist.

16. Verfahren nach Anspruch 15, wobei die für das Einschalten der Trocknungsheizung (53) niedrigste Temperatur und die für das Ausschalten der Trocknungsheizung (53) höchste Temperatur im Intensivtrocknungszeitraum höher eingestellt sind als in anderen Zeiträumen.

## Revendications

1. Sécheur (100) agencé pour sécher le linge en éliminant l'humidité contenue dans l'air circulant en utilisant un réfrigérant alimenté dans un conduit de condensation (4), dans lequel
une partie de commande du sécheur est configurée pour commander une valve de réfrigérant afin de réguler la quantité de réfrigérant alimentée par un distributeur de réfrigérant (6) dans le conduit de condensation (4) en fonction d'un pourcentage de teneur en humidité de l'air aspiré dans le conduit de condensation (4) depuis un tambour (3),
dans lequel, dans une période de début de séchage du processus de séchage, après la mise en marche d'un radiateur de séchage (53) la première fois, la partie de commande est configurée pour commander la fermeture de la valve de réfrigérant à un temps prédéfini (t1) après le début du processus de séchage ou jusqu'à ce que le radiateur de séchage (53) soit commandé pour être arrêté la première fois, et
dans lequel la partie de commande est configurée pour commander un rapport d'actionnement net différencié de la valve de réfrigérant, le rapport d'actionnement net étant obtenu en divisant le temps d'ouverture de la valve de réfrigérant par le temps de fermeture, et
dans lequel, après la période de début de séchage, la partie de commande est configurée pour commander le rapport d'actionnement net de la valve de réfrigérant afin qu'il soit un premier rapport dans une première période, un deuxième rapport dans une deuxième période et un troisième rapport dans une troisième période différencié chaque fois que chacune des première, deuxième et troisième périodes est modifiée en la suivante, les première, deuxième et troisième périodes continuant jusqu'à ce que l'alimentation de l'air chauffé soit terminée.

2. Sécheurs selon la revendication 1, dans lequel la partie de commande commande l'augmentation de la quantité de réfrigérant alimentée quand le pourcentage de teneur en humidité de l'air est élevé.

3. Sécheur selon la revendication 1, dans lequel la partie de commande commande le rapport d'actionnement net de la valve de réfrigérant pour qu'il soit le plus important dans la période centrale des trois périodes continues.

4. Sécheur selon la revendication 1, dans lequel la partie de commande commande le radiateur de séchage pour qu'il génère la plus grande quantité de la chaleur dans la période centrale des trois périodes continues.

5. Sécheur selon la revendication 1, dans lequel de l'air froid est alimenté pendant une durée prédéfinie au terme de l'alimentation de l'air chauffé, uniquement pour terminer le séchage.

6. Sécheur selon la revendication 1, dans lequel la deuxième période est une période de séchage intensif, dans lequel la partie de commande commande le rapport d'actionnement net de la valve de réfrigérant pour que dans la période de séchage intensif ayant le pourcentage de teneur en humidité le plus élevé il soit supérieur à celui dans les autres périodes.

7. Sécheur selon la revendication 6, dans lequel la période de séchage intensif commence à un temps prédéfini (t2) après le début du processus de séchage.

8. Sécheur selon la revendication 6, dans lequel la période de séchage intensif se termine à un temps prédéfini (t3) après le début du processus de séchage.

9. Sécheur selon la revendication 8, dans lequel la durée prédéfinie (t3) est prédéfinie différemment en fonction de la quantité de linge chargée dans le tambour (3).

10. Sécheur selon la revendication 6, dans lequel la période de séchage intensif se termine quand une différence de température entre une valeur d'une température ambiante détectée indirectement de l'air circulé dont la chaleur est échangée dans le tambour (3) et une valeur d'une température ambiante de l'air circulé avant son chauffage après qu'il a été aspiré dans un conduit de condensation (4) est une différence de température prédéfinie (ΔT1) ou plus.

11. Sécheur selon la revendication 10, dans lequel la différence de température (ΔT1) est prédéfinie en fonction de la quantité de linge à l'intérieur du tombeau (3).

12. Sécheur selon la revendication 1, dans lequel la partie de commande est configurée pour déterminer une période de séchage intensif parmi les première, deuxième et troisième périodes après la période de début de séchage, ladite période de séchage intensif ayant le plus haut pourcentage de teneur en humidité de l'air circulé, et pour commander la quantité de réfrigérant alimentée dans le conduit de condensation (4) pour qu'il soit plus important durant la période de séchage intensif que dans les autres périodes.

13. Procédé de commande d'un sécheur (100) agencé pour sécher le linge en éliminant l'humidité contenue dans l'air circulant en utilisant un réfrigérant alimenté dans un conduit de condensation (4), le procédé comprenant
la commande, au moyen d'une partie de commande du sécheur (100), d'une valve de réfrigérant afin de réguler la quantité de réfrigérant alimentée par un distributeur de réfrigérant (6) dans le conduit de condensation (4) en fonction d'un pourcentage de teneur en humidité de l'air aspiré dans le conduit de condensation (4) depuis un tambour (3),
dans une période de début de séchage du processus de séchage, après la mise en marche d'un radiateur de séchage (53) pour la première fois, la commande, au moyen de la partie de commande du sécheur (100), de la fermeture de la valve de réfrigérant à un temps prédéfini (t1) après le début du processus de séchage ou jusqu'à ce qu'un radiateur de séchage (53) soit commandé pour être arrêté la première fois, et
la commande, au moyen de la partie de commande du sécheur (100), d'un rapport d'actionnement net différencié de la valve de réfrigérant, le rapport d'actionnement net étant obtenu en divisant le temps d'ouverture de la valve de réfrigérant par le temps de fermeture, et
après la période de lancement de séchage, la commande, au moyen de la partie de commande du sécheur (100), du rapport d'actionnement net de la valve de réfrigérant afin qu'il soit un premier rapport dans une première période, un deuxième rapport dans une deuxième période et un troisième rapport dans une troisième période différencié chaque fois que chacune des première, deuxième et troisième périodes est modifiée en la suivante, les première, deuxième et troisième périodes continuant jusqu'à ce que l'alimentation de l'air chauffé soit terminée.

14. Procédé selon la revendication 13,
dans lequel la première période est une période de séchage initial durant laquelle la valve de réfrigérant est commandée à un rapport d'actionnement net prédéfini après le lancement du séchage ;
dans lequel la troisième période est une période de finition de séchage durant laquelle l'alimentation de l'air chauffé est terminée après la mise en oeuvre du séchage en commandant la valve de réfrigérant à un rapport d'actionnement net prédéfini ; et
dans lequel la deuxième période est une période de séchage intensif entre la période de séchage initial et la période de finition de séchage, la période de séchage intensif étant celle durant laquelle la valve de réfrigérant est commandée à un rapport d'actionnement net supérieur au rapport d'actionnement net prédéfini pour condenser de manière intensive l'humidité contenue dans l'air.

15. Procédé selon la revendication 14, dans lequel la quantité de chaleur générée par un radiateur de séchage (53) configuré pour chauffer l'air est commandée pour être la plus importante durant la période de séchage intensif.

16. Procédé selon la revendication 15, dans lequel la température la plus basse permettant la marche du radiateur de séchage (53) et la température la plus élevée permettant l'arrêt du radiateur de séchage (53) sont réglées pour être plus élevées dans la période de séchage intensif que dans les autres périodes.
